# EUROPÄISCHE PATENTANMELDUNG

(11) **EP 1 503 131 A2**
(43) Veröffentlichungstag der Anmeldung: **02.02.2005**
(21) Anmeldenummer: 04015229.0
(22) Anmeldetag: 29.06.2004
(51) Int. Cl.: F16L 33/24, F16L 19/028

(54) **Frischwasser-Zulaufgarnitur für wasserführende Haushaltsgeräte**

(30) Priorität: 01.08.2003 DE 10335330
(71) Anmelder: BSH Bosch und Siemens Hausgeräte GmbH, 81739 München (DE)
(72) Erfinder: Bolduan, Edwin, 13629Berlin (DE); Mazzo, Mauro, 22064 Casatenovo (LC) (IT); Wiemer, Horst, 14532 Kleinmachnow (DE)

(57) **Zusammenfassung**

Zur Vermeidung weiterer Teile bei der Verbindung eines Frischwasser-Zulaufschlauches mit einer Anschlusseinrichtung als die durch den Frischwasserzulaufschlauch und die Anschlusseinrichtung selbst gebildten Teile und zur Vereinfachung des Verbindungsprozesses gegenüber dem Stand der Technik wird vorgeschlagen, dass der Zulaufschlauch (1) einen Wellrohrschlauch (11) aus einem Trinkwasserqualität einhaltenden Kunststoff (PE,PA oder PP) enthält, das an die Anschlusseinrichtung (2) angekoppelte Ende (12) des Wellrohrschlauches (11) wenigstens annähernd zylindrisch geformt ist, der Wellrohrschlauch (11) außen mit einem Gewebemantel (10) aus Polyamidfäden oder -fasern überzogen ist und die Anschlusseinrichtung (2) durch Überspritzen des zylindrischen Endes (12) mittels des Kunststoffes des Anschlussstutzens (21) unverlierbar mit dem Wellrohrschlauch (11) verbunden ist.

## Beschreibung

Die Erfindung betrifft eine Frischwasser-Zulaufgarnitur für wasserführende Haushaltgeräte mit an mindestens einem Ende angebrachter Anschlusseinrichtung für die Verbindung mit einem Frischwasser-Festnetz und mit einem flexiblen gewellten Zulaufschlauch.

Eine solche Zulaufgarnitur ist in der älteren DE 102 07 556.5 der Anmelderin beschrieben. Darin ist ein gewellter Zulaufschlauch an seinem Ende wenigstens annähernd zylindrisch geformt und mit einem passenden zylindrischen Anschlussstutzen einer Anschlusseinrichtung dadurch verbunden, dass das zylindrische Ende über den Anschlussstutzen gezogen und mittels einer Presshülse unverlierbar verbunden ist. Bei einem Überzug des Wellrohrschlauches mit einem Nylongewebe drückt sich zwar die Gewebestruktur in die Oberfläche des zylindrischen Endes ein, eine gute Sicherung und verlässliche Dichtung entsteht aber dennoch erst, wenn am Anschlussstutzen eine ringförmige Struktur angebracht ist, in die sich die übrigen Teile beim Verpressen einformen, und außerdem zwischen dem zylindrischen Ende und dem Anschlussstutzen eine O-ringartige Dichtung eingelegt ist.

Der Erfindung liegt die Aufgabe zugrunde, eine Frischwasser-Zulaufgarnitur der eingangs genannten Art anzugeben, bei der zur Verbindung miteinander keine weiteren Teile erforderlich sind als der Frischwasserzulaufschlauch und die Anschlusseinrichtung selbst und bei der der Verbindungsprozess einfacher ist als beim Stand der Technik.

Gemäß der Erfindung wird diese Aufgabe durch das Kennzeichen des Anspruches 1 gelöst, indem der Zulaufschlauch einen Wellrohrschlauch aus einem Trinkwasserqualität einhaltenden Kunststoff (PE, PA oder PP) enthält, das an die Anschlusseinrichtung angekoppelte Ende des Wellrohrschlauches wenigstens annähernd zylindrisch geformt ist, außen mit einem Gewebemantel aus Polyamidfäden oder -fasern überzogen und die Anschlusseinrichtung durch Überspritzen des zylindrischen Endes mittels des Kunststoffes des Anschlussstutzens unverlierbar mit dem Wellrohrschlauch verbunden ist. Durch die Erfindung ist es erstmals möglich, für Trinkwasser geeignete Kunststoffe für Frischwasser-Anschlussgarnituren zu verwenden, die auf einfachste Weise dicht und fest miteinander verbunden werden können.

In Ausgestaltung dieser erfindungsgemäßen Lösung ist der Anschlussstutzen über eine beschränkte Länge von seinem freien Ende aus doppelwandig ausgeführt und das zylindrische Ende zwischen die Wände des doppelwandigen Abschnittes eingesetzt und durch Rasten oder Kleben oder Schweißen oder Spritzen mit dem doppelwandigen Abschnitt verbunden ist. Dadurch ergibt sich eine besonders strömungsgünstige Innenformung für den Anschlussbereich und zugleich ist die Abrisssicherheit des Schlauches von der Anschlusseinrichtung besonders hoch.

Eine weitere Alternative zur Lösung der vorstehend beschriebenen Aufgabe ist durch das Kennzeichen des Anspruches 3 gegeben, bei der der Zulaufschlauch einen Wellrohrschlauch aus einem Trinkwasserqualität einhaltenden Kunststoff (PE, PA oder PP) enthält, dass das an die Anschlusseinrichtung angekoppelte Ende des Wellrohrschlauches wenigstens annähernd zylindrisch geformt und zwischen zwei Teilen eines aus Kunststoff gefertigten Anschlussstutzen der Anschlusseinrichtung durch eine Klemmverbindung des Schlauchendes verbunden ist, wobei die beiden Teile durch Rasten oder Kleben oder Schweißen oder Spritzen miteinander verbunden sind. Hierfür gelten dieselben Vorteile wie für die erste Alternative beschrieben.

In einer besonders vorteilhaften Weiterbildung der zweiten Alternative der erfindungsgemäßen Frischwasser-Zulaufgarnitur weist das Ende des Wellrohrschlauches an seiner Mündung einen aufgebogenen Kragen auf, der zwischen radial zur Mittellinie des Anschlussstutzens verlaufenden Außenwandungen der beiden Teile liegt. Dadurch ist die Abrisssicherheit des Schlauches von der Anschlusseinrichtung besonders hoch.

Anhand von in der Zeichnung dargestellten Ausführungsbeispielen ist die Erfindung nachstehend erläutert. In der Zeichnung zeigen
- Fig. 1: eine erfindungsgemäße Zulaufgarnitur, bei der das zylindrische Ende des Zulaufschlauches vom Anschlussstutzen der Anschlusseinrichtung umspritzt ist,
- Fig. 2: eine Zulaufgarnitur, bei der das zylindrische Ende in den Hohlraum eines doppelwandigen Abschnitts des Anschlussstutzens geschoben ist,
- Fig. 3: ein anderes Ausführungsbeispiel, bei dem das zylindrische Ende des Zulaufschlauches mit einem Kragen versehen ist, der zwischen zwei Teilen der Anschlusseinrichtung formschlüssig gehalten ist, und
- Fig. 4: ein weiteres Ausführungsbeispiel ähnlich dem der Fig. 3.

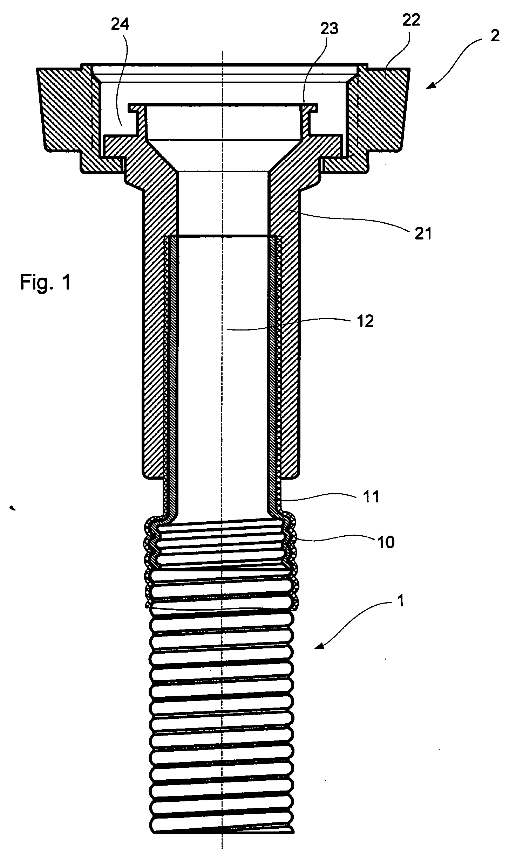

Der Zulaufschlauch 1 besteht aus einem gewellten Kunststoffschlauch 11 aus einem für Trinkwasser geeigneten Kunststoff, nämlich PE, PA oder PP, und einem darüber gezogenen Gewebeschlauch 10 aus Nylon™. Gemäß Fig. 1 ist der Gewebeschlauch 10 bis in das zylindrisch geformte Ende 12 des Wellrohrschlauches 11 gezogen. Das zylindrische Ende des Wellrohres lässt sich auf besonders einfache Weise thermisch in eine genügend maßgenaue zylindrische Form bringen, und zwar sowohl bereits bei der Herstellung von Wellrohrabschnitten fertiger Längen wie auch bei Meterware, bei der die zylindrische Form für den Endabschnitt des Wellrohres zurückgebildet werden und in dieser Form als Anschlussteil zur Verbindung mit der Anschlusseinrichtung dienen kann.

Die Anschlusseinrichtung 2 kann aus einem im wesentlichen rohrförmigen Anschlussstutzen 21 und einer Überwurfmutter 22 bestehen, mit deren Hilfe die Zulaufgarnitur an einem Gewindeanschlussteil (hier nicht dargestellt) befestigbar ist.

Vor der Herstellung der Verbindung wird das Ende 12 des Wellrohrschlauches 11 zu einem zylindrischen Teil zurückgeformt und der gesamte Schlauch mit einem festigkeitserhöhenden Gewebeschlauch 10 überzogen. Dann wird das zylindrisch geformte Ende 12 des Zulaufschlauches 1 in eine Spritzform eingelegt und mit einem Kunststoff, z. B. PA, für den Anschlussstutzen 21 umspritzt. Dabei geht der Kunststoff des Anschlussstutzens 21 mit dem Gewebeschlauch 10 eine innige Verbindung ein. Damit ist die Verbindung zwischen der Anschlusseinrichtung 2 und dem Zulaufschlauch 1 fertig.

Der Anschlussstutzen 21 hat innerhalb der Überwurfmutter 22 einen Ansatz 23 der auf seiner Außenseite mit der Mutter 22 zusammen einen Ringraum 24 für einen nicht dargestellten Dichtungsring bildet, der zur dichtenden Verbindung der Anschlusseinrichtung 2 mit einem ebenfalls nicht dargestellten Gewindeteil dient, das Bestandteil eines Ventils eines Hauswassernetzes sein kann.

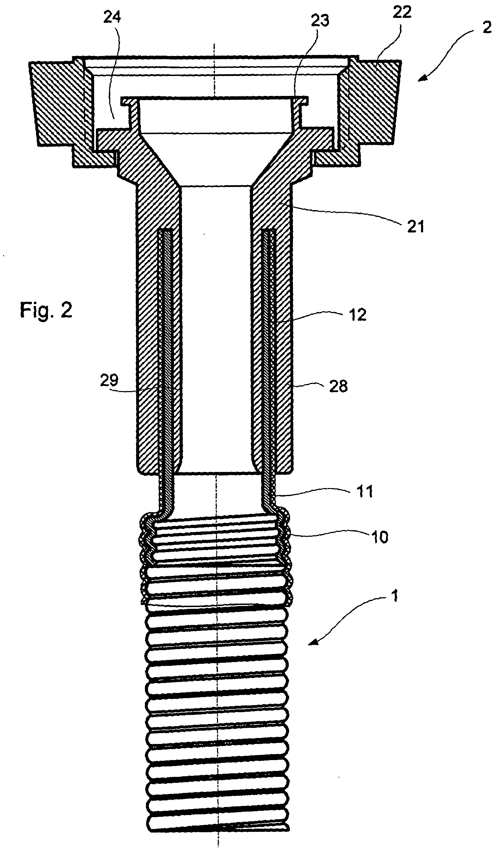

In der in Fig. 2 dargestellten Variante ist das zylindrische Ende 12 des Zulaufschlauches 1 in einen ringförmigen Hohlraum eines doppelwandigen Abschnittes 28, 29 des Anschlussstutzens 21 geschoben. Darin kann das zylindrische Ende 12 durch Rasten oder Kleben oder Schweißen oder Spritzen mit dem doppelwandigen Abschnitt verbunden sein. Beispielsweise kann das zylindrische Ende 12 komplett zusammen mit dem Gewebeschlauch durch den Kunststoff des doppelwandigen Anschlussstutzens 21 umspritzt sein.

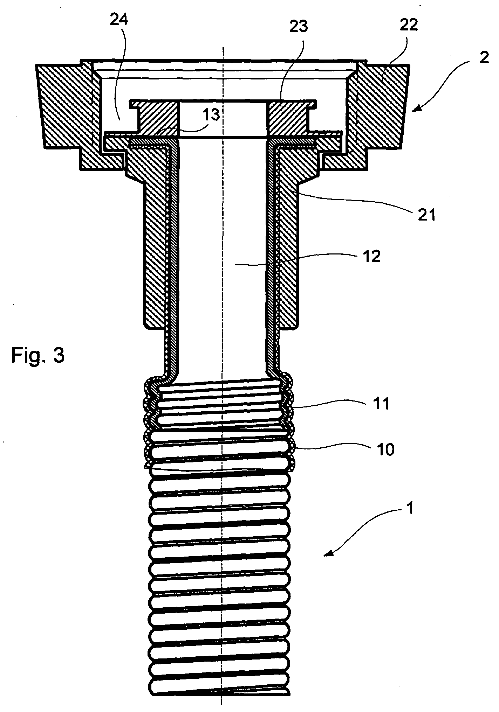

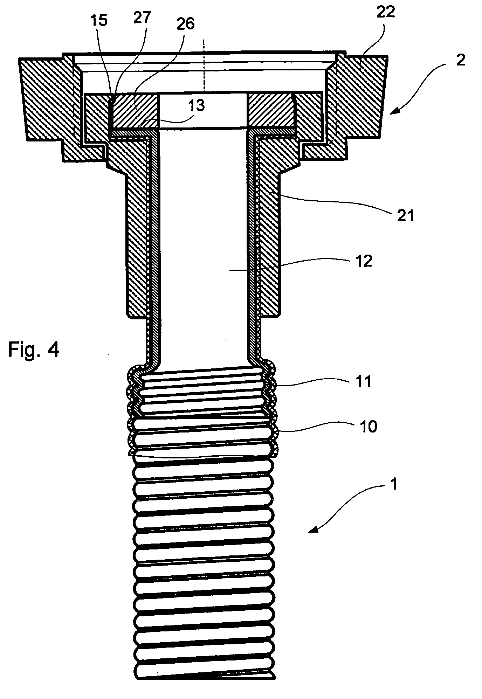

Anschlussseitig ist das zylindrische Ende 12 des Zulaufschlauches 1 gemäß den Beispielen in Fig. 3 und 4 flanschartig gekröpft. Bei dem in Fig. 3 dargestellten Beispiel ist die Außenseite des Flansches 13 bündig mit der Stirnseite des zylindrischen Endes 12, so dass ein Dichtungshaltering 25 mit seiner korrespondierenden Ringfläche beide überdeckt. Die Verbindung zwischen dem Dichtungshaltering 25 und dem zylindrischen Ende 12 einerseits und der Stirnfläche des zylindrischen Endes 12 andererseits kann am schnellsten mittels einer Spiegelschweißung hergestellt werden. Andere Verbindungstechniken wie Kleben, Spritzen oder Rasten sind ebenfalls möglich.

Ein Beispiel für eine Rastverbindung gibt Fig. 4. Das darin dargestellte Ausführungsbeispiel zeigt für den zylindrischen Anschlussstutzen 21 eine Mulde, die zur Aufnahme einerseits des abgekröpften Flansches 13 und andererseits eines Abschlussringes 26 dient. Der Abschlussring 26 hat am vorderen Rand eine ringförmige Kerbe 27, die mit mindestens drei am Innenumfang der Mulde verteilten Rastnasen 15 in der Weise zusammenarbeitet, dass der Abschlussring dadurch fest in der Mulde gehalten ist. Dadurch wird zugleich der gekröpfte Kragen 13 in der Mulde befestigt, so dass der Anschlussstutzen 21 unverlierbar mit dem zylindrischen Ende 12 des Zulaufschlauches 1 verbunden ist.

Die gezeigten Konturen für die Anschlusseinrichtung 2 sind - soweit sie nicht unmittelbaren Kontakt mit dem zylindrischen Ende 12 haben - nicht Gegenstand der Erfindung. So gehört die Überwurfmutter 22 nicht in den Schutzumfang der Ansprüche.

## Patentansprüche

1. Frischwasser-Zulaufgarnitur für wasserführende Haushaltgeräte mit an mindestens einem Ende angebrachter Anschlusseinrichtung (2) für die Verbindung mit einem Frischwasser-Festnetz und mit einem flexiblen gewellten Zulaufschlauch (1), **dadurch gekennzeichnet, dass** der Zulaufschlauch einen Wellrohrschlauch (11) aus einem Trinkwasserqualität einhaltenden Kunststoff (PE, PA oder PP) enthält, das an die Anschlusseinrichtung (2) angekoppelte Ende (12) des Wellrohrschlauches (11) wenigstens annähernd zylindrisch geformt ist, außen mit einem Gewebemantel (10) aus Polyamidfäden oder -fasern überzogen und die Anschlusseinrichtung (2) durch Überspritzen des zylindrischen Endes (12) mittels des Kunststoffes des Anschlussstutzens (21) unverlierbar mit dem Wellrohrschlauch (11) verbunden ist.

2. Frischwasser-Zulaufgarnitur nach Anspruch 1, **dadurch gekennzeichnet, dass** der Anschlussstutzen (21) über eine beschränkte Länge von seinem freien Ende aus doppelwandig ausgeführt und das zylindrische Ende (12) zwischen die Wände (28 und 29) des doppelwandigen Abschnittes eingesetzt und durch Rasten oder Kleben oder Schweißen oder Spritzen mit dem doppelwandigen Abschnitt verbunden ist.

3. Frischwasser-Zulaufgarnitur für wasserführende Haushaltgeräte mit an mindestens einem Ende angebrachter Anschlusseinrichtung (2) für die Verbindung mit einem Frischwasser-Festnetz und mit einem flexiblen gewellten Zulaufschlauch (1), **dadurch gekennzeichnet, dass** der Zulaufschlauch einen Wellrohrschlauch (11) aus einem Trinkwasserqualität einhaltenden Kunststoff (PE, PA oder PP) enthält, außen mit einem Gewebemantel (10) aus Polyamidfäden oder -fasern überzogen ist und das an die Anschlusseinrichtung (2) angekoppelte Ende (12) des Wellrohrschlauches (11) wenigstens annähernd zylindrisch geformt und zwischen einem Teil (23, 26) der Anschlusseinrichtung (2) und einem aus Kunststoff gefertigten Anschlussstutzen (12) der Anschlusseinrichtung (2) durch eine Klemmverbindung des Schlauchendes (12, 13) verbunden ist, wobei diese beiden Teile (12, 13, 23 bzw. 12, 13, 26) durch Rasten oder Kleben oder Schweißen oder Spritzen miteinander verbunden sind.

4. Zulaufgarnitur nach Anspruch 3, **dadurch gekennzeichnet, dass** das Ende (12) des Wellrohrschlauches (11) an seiner Mündung einen aufgebogenen Kragen (13) aufweist, der zwischen radial zur Mittellinie des Anschlussstutzens (12) verlaufenden Außenwandungen der beiden Teile (12, 13, 23 bzw. 12, 13, 26) liegt.
